# EUROPEAN PATENT APPLICATION

(11) **EP 1 322 115 A1**
(43) Date of publication of application: **25.06.2003**
(21) Application number: 01130384.9
(22) Date of filing: 20.12.2001
(51) Int. Cl.: H04N 7/088

(54) **Method and apparatus for value-added digital recording**

(71) Applicant: DEUTSCHE THOMSON-BRANDT GMBH, 78048 Villingen-Schwenningen (DE)
(72) Inventor: Adolph, Dirk, 30952 Ronnenberg (DE); Hui, Li, 30419 Hannover (DE); Blawat, Meinolf, 30161 Hannover (DE); Schiller, Harald, 30539 Hannover (DE)
(74) Representative: Thies, Stephan

(57) **Abstract**

It is proposed to transmit time-relevant value added information in the form of keywords along with TV broadcast in a service, and to provide dedicated instruments which can access the keywords, store them together with and related to the broadcast program, and which allow related usage features like easy keyword search or keyword-controlled programmed recording. By transmitting such time-related keywords it is possible to search for individual scenes of programs.

## Description

The invention relates to a method and an apparatus for conveying annotation information related to arbitrary segments of broadcast data. Particularly it relates to the identification or retrieval of content from a number of TV channels.

### Background

The growing number of TV channels and other sources of multimedia material makes it more and more difficult for the consumer to identify or retrieve the content he/she desires. Also, TV enthusiasts are interested in any kind of background information, which today must be collected, referenced and archived manually and stored physically separate from any AV recordings. Today's value added services are suitable for direct human (consumer) consumption only, so that they are not directly accessible for straightforward machine-based automatic evaluation or processing. The value added services are scarce and consist either of alternative audio channels or of videotext pages transmitted along with the "parent" TV signal.

Any audio channel, for advanced machine-based evaluation or processing needs to be processed by "speech to text" first, which - in the realm of consumer electronics - means a huge additional hardware cost for any device. Text based services, on the other hand, are ready for simple and inexpensive processing, but in today's usage, the content of videotext pages (except in the case of subtitling or dedicated hard-to-hear material) is not directly related to the AV content of the TV channel used as the videotext's carrier. Therefore, many kinds of processing and/or evaluation could theoretically be done, but they would not allow any conclusions about the underlying AV.

For instance, to a limited extent, program accompanying material is transmitted in today's Teletext/Videotext systems. But these transmissions have a limited temporal resolution in that they only describe a program as a whole, but not individual scenes/shots/chapters thereof. Other accompanying material consists in special audio channels dedicated to minority needs like original language soundtrack or specially edited soundtracks for the hard-of-hearing. Most of these transmissions are human-readable only, because they either are an audio signal, they do - even if text - not follow a well-defined structure/form, or they lack any time information.

In this connection it is known from US 5 703 655 to generate video retrieval information by evaluating the content of state-of-the-art Closed Caption transmissions. Thereby video segments of certain start- and duration- times are defined on the receiver side.

Furthermore, according to US 5 859 662, state-of-the-art Closed Caption content is evaluated in the light of specific keywords to automatically find and record TV-signals of interest. Length and position of segments of interest relative to keyword matches are definable by the user without influence of the program provider.

US 6 198 511 suggests to scan state-of-the-art Closed Caption content for keyword occurrences and to fire freely programmable events. Thus, certain actions can be started based on the content of Closed Caption.

In view of that it is the object of the present invention to provide more flexible possibilities of retrieving program material.

### Invention

According to the present invention, this object is solved by a method for conveying annotation information related to arbitrary segments of broadcast data by providing side information encompassing said annotation information and optionally validity information related to said annotation information, transmitting said broadcast data and said side information to a user accessing said segments of said broadcast data on the basis of said validity information contained in said side information.

Furthermore, according to the present invention there is provided an apparatus for transmitting annotation information related to arbitrary segments of broadcast data with storing means for providing side information encompassing said annotation information and optionally validity information related to said annotation information, transmitting means for transmitting said broadcast data being accessible to said user by using said annotation information and/or validity information contained in said side information.

Finally, there is provided an inventive apparatus for receiving annotation information related to arbitrary segments of broadcast data with first receiving means for receiving said broadcast data, second receiving means for receiving side information encompassing said annotation information and optionally validity information related to said annotation information, controlling means for making accessible said segments of said broadcast data to said user by using said validity information contained in said side information.

Thus it is possible to transmit text-based auxiliary information not only along with a TV program but such that it is related or linked to it. This relation or linking is meant here in the sense of metadata being linked to primary AV data or "essence"; it conceptually involves the notion of "temporal linking" which can be either implicit or explicit, as shown below. Also, the proposed auxiliary data being text based, offers two significant advantages: First, any kind of searching, comparing or sorting operation is much more easily performed on text rather than on audio data; second, embodiments of the current invention can rely to a large extent upon existing infrastructure from the video-text/teletext system.

Specifically time-related value added information (keywords) may be transmitted along with TV broadcast in a service, and dedicated instruments may be provided which can access the keywords, store them together with and related to the broadcast program, and which allow related usage features like keyword search on the recorded program material, keyword-controlled programmed recording, or indexing and sorting of keyword-equipped program recordings.

### Drawings

Exemplary embodiments of the invention are illustrated in the drawings and are explained in more detail in the following description.
- Fig. 1: shows a block diagram of the inventive transmission method;
- Fig. 2: shows a timing chart of a first example of implicit linking of auxiliary information with a TV program;
- Fig. 3: shows a timing chart of a second example of implicit linking of auxiliary information with a TV program;;
- Fig. 4: shows a timing chart of a third example of implicit linking of auxiliary information with a TV program;;
- Fig. 5: shows a timing chart for explicit linking; and
- Fig. 6: shows a block diagram of an alternative transmission method.

### Exemplary embodiments

Teletext or Videotext is a medium which transmits ASCII-based text pages that are destined for a self-contained display on a TV screen. Nevertheless, by virtue of being transmitted in the vertical blanking interval of a certain TV picture, any Videotext character is implicitly linked to a certain time in the parent TV program. With conventional Videotext usage, this temporal linking becomes mostly irrelevant, because all pages are transmitted repeatedly in a carousel fashion.

However, a dedicated service channel according to this invention would not use the carousel transmission mode of conventional Videotext but would transmit all its content only once. In this way, the above mentioned implicit temporal linking becomes significant and can be exploited for retrieving a section of TV program based on a keyword search.

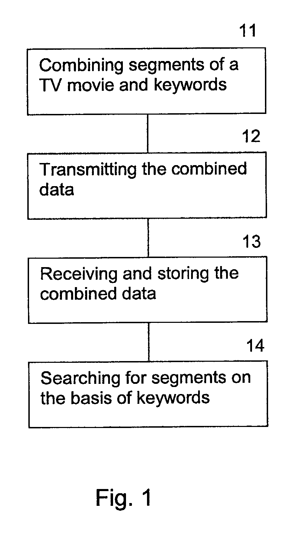

An example for this is shown in the simplified block diagram of Fig. 1. In a first step 11 the TV provider combines segments of a TV program or movie and specific keywords relating to these segments. For example, the beginning of each scene is marked with a specific keyword. The combined data, i.e. the movie together with the keywords, is transmitted 12 to the receiver. The receiver stores 13 the combined data. On the basis of the keywords it is possible to search 14 for segments which are marked with predetermined keywords.

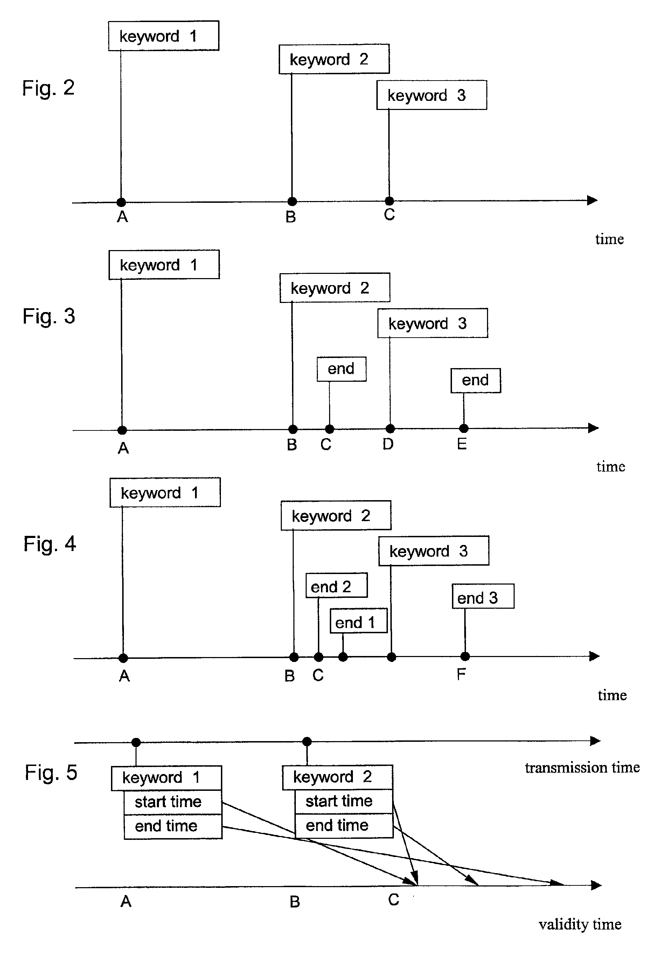

With implicit temporal linking, each keyword can only be assumed to be valid until the occurrence of the next keyword, which is illustrated with the example in Figure 2. There, keyword 1 is valid from time "A" until time "B", keyword 2 is valid from time "B" until time "C", and so on.

In a different embodiment, illustrated in Figure 3, a dedicated "end" keyword is defined and transmitted at a certain time to indicate the validity end of the immediately preceding keyword. In this case, the validity of a transmitted keyword ends when either the next keyword or the special "end" keyword is transmitted. Hence, keyword 1 is valid from time "A" until time "B", keyword 2 is valid from time "B" until time "C", and keyword 3 is valid from time "D" until "E".

In yet another embodiment, also illustrated in Figure 3, the "end" keyword is defined to indicate the validity end of all keywords transmitted since the last "end" keyword. In this case, the validity of a transmitted keyword ends when the next special "end" keyword is transmitted. This embodiment allows the validities of several keywords to overlap temporally, which may be favourable for some applications. In the example of Figure 3, keyword 1 is valid from time "A" until time "C", keyword 2 is valid from time "B" until time "C", and keyword 3 is valid from time "D" until "E".

In yet another embodiment, illustrated in Figure 4, there is a well-defined possibility to individually terminate the validity of each keyword, separately. This embodiment allows even more flexible overlapping of validities, if needed. In the Figure keyword 1 is valid from time "A" until time "D", keyword 2 is valid from time "B" until time "C", and keyword 3 is valid from time "E" until "F".

However, all the above embodiments of implicit temporal linking are unsuited, if the application requires to allow a big number of keywords becoming valid at the same time. Restrictions are due to the relatively low bandwidth available for each Videotext channel ("page"). For these cases, the current invention foresees an explicit linking mechanism, where each keyword can be associated with a start time. Using this mechanism, keywords can be transmitted in advance, and by analyzing their associated start times, a cognizant system recognizes that they are not yet valid, and can activate each keyword when the program time reaches that keyword's individual start time. In an extension of explicit temporal linking, the present invention allows to associate, in addition to the start time, an end time (or, equivalently, a duration) to a keyword, which is illustrated in Fig. 5. In the example shown there, start and end times are chosen such that the validity of both keywords starts at the same time, and the validity of keyword 2, although transmitted after keyword 1, ends earlier than the validity of keyword 1. Fig. 5 shows that, with start time and end time associated to each keyword, keywords can be linked to entire sections of TV material, and, correspondingly, searching for a keyword thus marked provides a pointer to a whole section of TV program material. This allows, amongst other features, an easy way of keyword controlled automatic programmed recording.

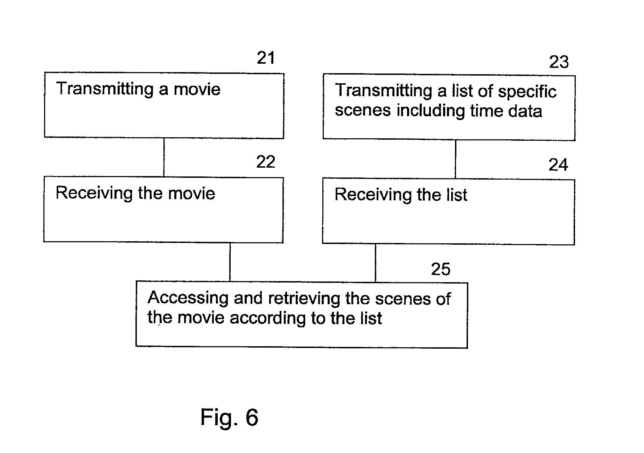

As soon as explicit temporal linking is employed, one is no longer confined to a transmission of the side information embedded into the TV material it relates to. Consequently, yet another set of embodiments of the present invention foresee a transmission of the side information on separate transmission ways, as illustrated in Fig. 6.

In step 21 a program or movie is transmitted from a broadcasting facility. On the receiver side this movie is received in step 22. In parallel explicit temporal linking data are transmitted from the same data source, i.e. the broadcasting facility, or another source like the internet. For example, a list of specific scenes including time data is transmitted 23 to a receiver, where the list is received 24. Now the scenes of the movie can be accessed and retrieved 25 according to the list.

In all embodiments where side information is transmitted separately, yet another set of embodiments can exploit the fact that a separate transmission channel can actually carry the side informations for more than one TV channel. This can be realized, if every annotation keyword transmitted over the separate channel gets attached (either explixcitly or implicitly) some kind of program identification data, to specify to which of a predefined set of programs that specific keyword relates. Especially in the area of annotation services provided by entities separate from individual program providers, these kinds of embodiments may be appropriate and interesting.

In the following there are given some examples for applying keywords:
**Keywords describing scene location and setting**
   For some kinds of programs it may be a valuable search criteria to have keywords which describe the location or setting where each scene of the program was made. This can either be done in a geographic sense (e.g. giving place names or GPS coordinates in case of documentaries' scenes) or in a more abstract and qualitative sense (specifying terms like "outdoors", "in xyz's house" in case of fiction movies).
**Keywords describing cast of the scene**
   Especially for movie enthusiasts, it may be interesting to be able to identify specific scenes where a certain actor is present. Therefor, one usage of the present invention can consist in transmitting - for every scene - the list of actors present.
**Keywords describing ongoing action**
   Describing the ongoing action in a program with common sense keywords may enable other useful search and retrieval features. This is similar to the (audio based) abridging services which exist today for visually impaired audiences.
**Keywords related to products visible in the scene**
   A whole new set of attractive applications opens up if the keywords of the current invention are used to convey information about brand products which are visible in the program video. With the keyword being in the extreme just an URL of the associated e-commerce site, powerful cross-marketing or cross-merchandising schemes can easily be supported.
**Keywords describing the position within the program's structure**
   DVD with its navigation data has brought to the general consumer public for the first time a medium where content can be and typically is organized and subdivided into a certain constellation of subunits, and where the structuring toolset can be considerably richer that the simple "track" concept of LPs/CDs. Compared to this meanwhile quite accepted standard of "structured-ness", TV broadcast suffers by not being structured in any way below the level of "program". The keywords of the present invention can easily be used to associate structuring terms like scene/chapter/episode to individual points in time or time intervals of the program content.

For all kinds of keywords exemplified above, the usage of "free text" and hence not being restricted to predefined sets of tags offers the advantage that the units or items in question can be denoted by terms which can optimally be adapted to the nature of the program's content. As an example, keywords to denote subsections of programs could be denoted as "shots" for a movie ("1^{st} shot" "2^{nd} shot" etc.), "movement" for a classical music video, "half" for a soccer transmission, "round" for a boxing transmission, etc.

## Claims

1. Method for conveying annotation information consisting of one or more annotation items related to arbitrary segments of broadcast data by
providing (11) side information encompassing said annotation information and optionally validity information related to said annotation information,
transmitting (12, 21, 23) said broadcast data and said side information to a user,
accessing said segments of said broadcast data and/or other data related to said segments of said broadcast data by using said validity information contained in said side information.

2. Method according to claim 1, wherein said side information is transmitted (12) to the user embedded into said broadcast data.

3. Method according to claim 1, wherein said side information and said broadcast data are transmitted (21, 23) to the user using separate transmission means.

4. Method according to any of the preceding claims, wherein said broadcast data, preferably audio-visual program material, and said side information are stored (13) at the user side in a storage means and are used at later time upon playback from said storage means.

5. Method according to any of the preceding claims, wherein said validity information contains start time information for each of said annotation items implicitly or explicitly.

6. Method according to any of the preceding claims, wherein said validity information contains end time information or duration information for each of said annotation items implicitly of said annotation information implicitly or explicitly.

7. Method according to claim 3, wherein said validity information contains a program identification information for each of said annotation items implicitly or explicitly.

8. Method according to one of the claims 5 to 7, wherein said validity information is coded by a predetermined coding convention such that it can be transmitted over a text-only side information channel.

9. Method according to one of the preceding claims, wherein said annotation information is generated by selecting elements of a predetermined set of text elements, which is made known to the user beforehand by separate transmission means.

10. Apparatus for transmitting annotation information consisting of one or more annotation items related to arbitrary segments of broadcast data with
storing means for providing side information encompassing said annotation information and optionally validity information related to said annotation information,
transmitting means for transmitting (12, 21, 23) said broadcast data and said side information to a user, wherein said segments of said broadcast data are accessible to said user by using said validity information contained in said side information.

11. Apparatus according to claim 10, wherein said side information is transmitted to the user embedded in said broadcast data by said transmitting means.

12. Apparatus according to claim 10, wherein said transmitting means includes a first transmitting device for transmitting (21) said broadcast data and a second transmitting device for transmitting (23) said side information.

13. Apparatus according to one of the claims 10 to 12, wherein said validity information contains start-time information for each of said annotation items implicitly or explicitly.

14. Apparatus according to one of the claims 10 to 13, wherein said validity information contains end-time information or duration information for each of said annotation items implicitly or explicitly.

15. Apparatus according to claim 12, wherein said validity information contains a program identification information for each of said annotation items implicitly or explicitly.

16. Apparatus according to one of the claims 10 to 15, further including coding means for coding said validity information by a predetermined coding convention such, that it can be transmitted over a text-only side information channel.

17. Apparatus according to one of the claims 10 to 16, further including selecting means for generating said annotation information from a predetermined set of text elements.

18. Apparatus for processing annotation information consisting of one or more annotation items related to arbitrary segments of broadcast data with
first receiving means for receiving said broadcast data,
second receiving means for receiving side information encompassing said annotation information and optionally validity information related to said annotation information and
controlling means for making accessible to said user said segments of said broadcast data and/or other data related to said segments of said broadcast data by using said validity information contained in said side information.

19. Apparatus according to claim 18, wherein said first receiving means is identical to said second receiving means and said side information is embedded into said broadcast data.

20. Apparatus according to claim 18 or 19, further including storing means for storing said broadcast data, preferably audio-visual program material, and said side information for playing back at a later time.

21. Apparatus according to one of the claims 18 to 20, wherein said validity information contains start-time information for each for said annotation items implicitly or explicitly.

22. Apparatus according to one of the claims 18 to 21, wherein said validity information contains end-time information or duration information for each of said annotation items implicitly or explicitly.

23. Apparatus according to one of the claims 18 to 22, wherein said validity information contains a program identification information for each of said annotation items implicitly or explicitly.

24. Apparatus according to one of the claims 18 to 23, further including decoding means for decoding coded validity information being transmitted over a text-only side information channel.
